# EUROPEAN PATENT APPLICATION

(11) **EP 2 233 195 A1**
(43) Date of publication of application: **29.09.2010**
(21) Application number: 09156439.3
(22) Date of filing: 27.03.2009
(51) Int. Cl.: B01D 53/00, B01D 53/75

(54) **System and method for recovering hydrogen from exhausted gas of epitaxial processes and other industrial processes**

(71) Applicant: Meridionale Impianti S.p.A., Caponago (IT)
(72) Inventor: Raffa, Salvatore, 20100 Milano (IT)
(74) Representative: Jorio, Paolo

(57) **Abstract**

It is provided a system (1) for recovering hydrogen from exhausted gas of industrial processes using hydrogen as a "gas carrier", in particular epitaxial process and semiconductor and/or photovoltaic industrial processes. The recovery process essentially consists of the following phases: exhausted gas condensation with chlorosilanes recovery, residual impurities abatement treatment, final purification preferably via a palladium membrane unit.

## Description

The present invention relates to a system and a method for recovering hydrogen from exhausted gas of epitaxial processes and all those other industrial processes, in particular processes of semiconductor and/or photovoltaic industries, using hydrogen as a "gas carrier".

Epitaxial reactors and/or process equipments of the semiconductor and photovoltaic industries discharge a flow of gas that is very rich in hydrogen but contains also other gases as impurities (chlorosilanes, hydrochloric acid, diborane, phosphine).

Fully satisfactory systems and methods for separation and elimination of such components from the exhausted gas and recovery of high-purity hydrogen are not currently available.

It is an object of the present invention to provide a system and a method for recovering hydrogen from exhausted gas that allow hydrogen having a high degree of purity to be effectively obtained, while being also relatively simple and inexpensive.

In particular, it is an object of the invention to provide technologies that are able to recover raw materials and simplify disposal treatment processes for the exhausted products, bringing to important pay back either from the economical point of view or from the environmental point of view; the invention is specifically dedicated to the recovery of hydrogen and chlorosilanes contained in exhausted gas from epitaxial reactors of the semiconductors production or in all those processes of semiconductor and/or photovoltaic industries that use hydrogen as "gas carrier".

The present invention therefore concerns a system and a method for hydrogen recovery from exhausted gas as defined in essential terms in annexed claims 1 and 3 respectively, and in the dependent claims as for preferred additional features.

The system and method according to the invention allow ultrapure hydrogen at high degree of concentration to be obtained, in such a way to make it suitable as feeding gas for epitaxial reactors and/or other equipments, or in general terms as a carrier of clean energy for other applications.

After a distillation and purification process, the invention, moreover, allows chlorosilanes to be recovered that can be re-used in the production cycle of the semiconductors/photovoltaic industry or for other applications.

The invention is described in details in the following non-limiting embodiment, with reference to the drawings attached, where:

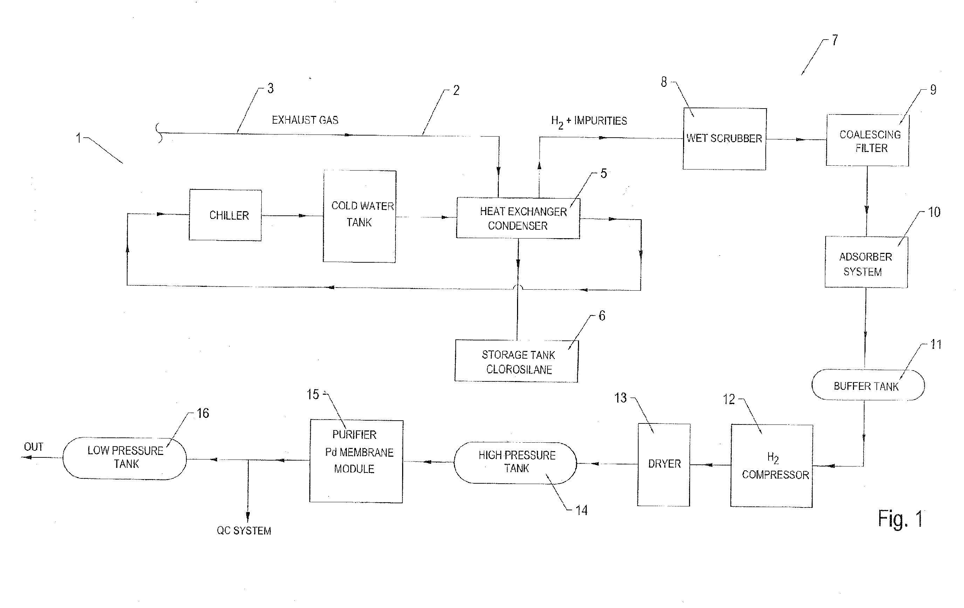

- Figure 1 is a block diagram showing the system according to the invention;

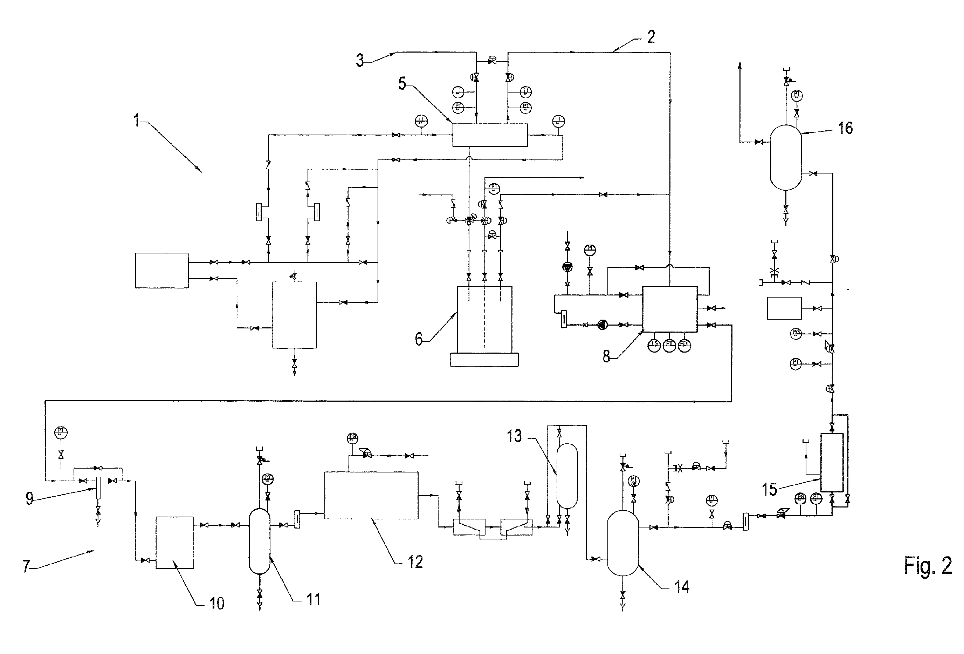

- Figure 2 is a plant diagram showing the main components of the system according to the invention.

Referring to the attached Figures, reference number 1 indicates as a whole a system for recovering hydrogen from exhausted gas of industrial processes, and particularly from epitaxial processes and semiconductor and/or photovoltaic industries processes that use hydrogen as "gas carrier".

System 1 includes a gas circulation circuit 2, having an inlet 3 for hydrogen-containing exhausted gas, connected to an outlet of an epitaxial reactor or any other equipment using hydrogen as gas carrier for the semiconductor or photovoltaic industries (not shown).

Circuit 2 connects in sequence the following components:
- a heat exchanger/condenser 5 for condensation and removal of chlorosilanes, having a blow down line connected to a preferably cylindrical container 6 for storage of chlorosilanes.
- a residual impurities abatement group 7, comprising a wet scrubber device 8, a filter-dryer 9, a dry chemical absorption scrubber unit 10, a buffer tank 11, a high pressure compressor 12, a dryer 13;
- a storage tank 14;
- a palladium-membrane final purification unit 15.

The gaseous mixture to be treated is piped into heat exchanger/condenser 5, for instance a tube bundle heat exchanger/condenser made of AISI 316 stainless steel, with cooling fluid (water and glycol at 30%) countercurrent to the gas.

The gaseous mixture, by passing through a forced path in the heat exchanger/condenser 5, is so cooled as to cause condensation of chlorosilanes, and specifically of silicon tetrachloride (SiCl₄), trichlorosilane (SiHCl₃) and dichlorosilane (SiH₂Cl₂).

Heat exchanger/condenser 5 is equipped with a blow down line that allows the collection of the liquid condensed into container 6.

The hydrogen mixture, containing hydrochloric acid and several other impurities, passes through residual impurities abatement group 7 and first of all into wet scrubber device 8, acting as a first treatment stage where hydrochloric acid is neutralized.

Then the gas mixture, partially purified, passes through a second treatment stage defined by filter-dryer 9 for removal of humidity deriving from the treatment occurred in the wet scrubber device 8; and then through a third treatment stage defined by dry scrubber unit 10, that is a stainless steel column filled up with an absorbent granulated bed of various type according to the type of impurity to be absorbed.

Al the end of the residual impurities abatement treatment phase the gaseous mixture, which is more and more pure, passes through buffer tank 11; buffer tank 11 is for instance made of stainless steel and has a vertical cylindrical form; it is equipped with 1 ½" gas female connections, two of which are for the IN and OUT gas, while the other two are for the safety and the drain valves; it is designed according to a VSR code and its stability is guaranteed from three fixed pyramidal supports.

Compressor 12 is needed for gas circulation into circuit 2; for instance compressor 12 is a three-stage compressor equipped with the following components:
- compression cylinder with filter on the suction side, safety valves on suction and supply side, check valve on supply side, pneumatic valves on suction and supply side in order to isolate the compressor in case of emergency;
- hydrostatic driven transmission with electric motor EExde IIC;
- inter-phase and supply heat exchangers and oil heat exchanger;
- control and instrumentation panel of the compressor.

The electrical control instrumentation is realized according to the ATEX 94/9/CE guidelines.

The compressor does not require a forced feed lubrication system, since it is equipped with self-lubricating seals and it does not allow in any case the contamination of the gas by the transmission oil due to the presence of the intermediate separation double isolation chamber; therefore oil separators are not necessary.

Foundations or clamps are not necessary because of the hydrostatic low frequency transmission.

The system is equipped with an IP 55 protected version not explosion-proof switchboard in order to supply power to the compressor and to the automation control system and it is provided with start up and shutdown push-buttons.

The cooling is realized by a closed circuit system with glycol recirculation, including:
- appropriate area cooler panel with fan;
- recirculation pump of appropriate capacity for the circulation of the glycol into the compressor and the radiator

Pneumatic driven valves are installed in the compressor suction and supply side for the compressor isolation in case of emergency.

Downstream compressor 12, after a further dryer 13, there is a storage tank 14 acting as a container of the hydrogen deriving from the high pressure compressor (for instance around 41 absolute bars).

Storage tank 14, as the previous tank, is designed according to the VSR code and the European Guideline 97/23/CE (PED); in order to save space it has a vertical cylindrical form; it is equipped with 1 ½" gas female connections, two of which are for the IN and OUT gas, while the other two are for the safety and the drain valves; the tank stability is guaranteed from three fixed pyramidal supports.

Then purification unit 15 with palladium membranes allows the highest degree of purity of hydrogen to be obtained; unit 15 is an independent unit provided with a heating element (electric resistance). Such system is able to purify the gas, deriving from high pressure storage tank 14, from all of the residual impurities till a degree of purity of 99.99999%.

The high purity hydrogen is finally collected into a low pressure storage tank 16, to be used again in the epitaxial process or in other processes needing Pure Hydrogen.

The system includes different safety devices:
- an emergency switch is installed near the electric compressor engine in order to immediately shutdown the machine in case of emergency
- among the active safety protection systems, an extinguisher of class D has been forecasted due to the presence of the palladium in the purification system
- among the passive safety protection systems, a sprinkler system has also been forecasted.

The invention method essentially includes therefore the following steps:
- exhausted gas condensation with chlorosilanes recovery , via heat exchange preferably with a glycol solution;
- residual impurities abatement treatment;
- final purification, preferably through a palladium membrane unit.

The residual impurities abatement treatment in turn comprises:
- a wet scrubber phase for hydrochloric acid abatement;
- a filtering-drying phase for removal of humidity deriving from the previous wet abatement treatment;
- a dry chemical absorption scrubber phase, via an absorbent granulated bed of different type according to the type of impurity to be absorbed;

It is intended that modifications and changes can be introduced into the system and the method herein described and illustrated without, however, departing from the scope of the accompanying Claims.

## Claims

1. System (1) for recovering hydrogen from exhausted gas of industrial processes using hydrogen as a "gas carrier", in particular epitaxial processes and semiconductor and/or photovoltaic industrial processes; the system (1) comprising a heat exchanger/condenser (5) for condensation and removal of the chlorosilanes from the exhausted gas.

2. System according to claim 1, wherein the system (1) comprises a circuit (2) that connects:
- a heat exchanger/condenser (5) for condensation and removal of chlorosilanes;
- a residual impurities abatement group (7), including a wet scrubber device (8) for hydrochloric acid removal, a filter-dryer (9) for abatement of humidity deriving from the treatment in the wet scrubber device (8), a dry chemical absorption scrubber unit (10) provided with a granulate adsorbing bed;
- a palladium-membrane final purification unit (15).

3. Method for recovering hydrogen from exhausted gas of industrial processes using hydrogen as a "gas carrier", in particular epitaxial processes and semiconductor and/or photovoltaic industrial processes; the method comprising an exhausted gas condensation phase for condensation and removal of chlorosilanes from the exhausted gas, performed via heat exchange preferably with a glycol solution.

4. Method according to claim 3, comprising, after the condensation phase, the phases of:
- residual impurities abatement treatment;
- final purification, preferably performed by a palladium membrane unit.

5. Method according to claim 4, wherein the residual impurities abatement treatment includes:
- a wet abatement phase for neutralization of hydrochloric acid;
- a filtering-drying phase for removal of the humidity deriving from the previous wet abatement phase;
- a dry chemical absorption scrubber phase, performed by an absorbent granulated bed of different type according to the type of impurity to be absorbed.
